# EUROPEAN PATENT SPECIFICATION

(11) **EP 3 122 640 B1**
(45) Date of publication and mention of the grant of the patent: **26.09.2018**
(21) Application number: 14750013.6
(22) Date of filing: 19.05.2014
(51) Int. Cl.: B65B 65/00, B65B 35/30, B65B 35/02, A23G 4/02, A23G 4/04, B26D 1/02, B26D 7/32, B65B 11/00, B65B 41/12, B65B 61/06, B65B 61/28, B65B 11/06, B65B 11/46

(54) **FEEDER FOR MACHINES FOR WRAPPING SHEET-LIKE CHEWING GUM PRODUCTS**
ZUFÜHRVORRICHTUNG FÜR MASCHINEN ZUM EINWICKELN VON BLATTARTIGEN KAUGUMMI PRODUKTEN
DISPOSITIF D'ACHEMINEMENT POUR MACHINES POUR ENVELOPPER DES PRODUITS GOMME À MACHER EN FORME DE FEUILLE

(30) Priority: 26.03.2014 IT BO20140166
(43) Date of publication of application: 01.02.2017
(73) Proprietor: Gima S.p.A., 40069 Zola Predosa (BO) (IT)
(72) Inventor: MALDARELLI, Lorenzo, 40136 Bologna (IT)
(74) Representative: Modiano, Micaela Nadia
(86) International application number: PCT/IT2014/000135
(87) International publication number: WO 2015/145472

(56) References cited:
- EP-A1- 0 820 943
- EP-A1- 2 835 056
- DE-A1- 19 617 187
- US-A- 2 652 788
- US-A- 3 933 064
- US-A- 4 281 757
- US-A- 4 475 426
- US-A- 5 309 697
- US-A1- 2010 287 882
- US-A1- 2010 307 106

## Description

The present invention relates to a feeder for machines for wrapping sheet-like chewing gum products.

The requirement to individually wrap sheet-like products is particularly strongly felt for chewing gum in the form of ingot-like sticks, which, inside the respective package, are individually wrapped in order to preserve their integrity and maintain a good standard of hygiene.

Packaging chewing gum in sticks involves the production of the sticks starting from larger pieces (obtained through a die punch, a shearer and the like) and subsequently passing each individual stick through a succession of stations that are designed to juxtapose the wrapping sheet and close the respective flaps around the stick itself.

An example of such a packaging machine is known from document US 3,933,064. The speed of the subsequent operations necessary for wrapping is strongly limited by the characteristics of the product on which to operate.

In fact if the sheet-like products are delicate and/or easily deformable, they could be subject to damage if they are subjected to high accelerations and/or if they come into contact with the rigid components that carry out the folding of the flaps.

In order to overcome such drawback, when packaging chewing gum in sticks, the environment in which the wrapping operations are executed is climate controlled.

Sticks of chewing gum in fact exhibit a substantially elastomeric behavior and their rigidity is increased when their temperature is reduced.

So operating on chewing gum in sticks kept at low temperatures (in any case lower than the ambient temperature of a workplace) thus makes it possible to maintain higher wrapping speeds.

In any case, even after adopting low temperatures of the environment in which to operate, there is still a limit to the speed of the operations to wrap the chewing gum, owing to the delicate nature of the product itself (which cannot be completely eliminated by reducing the temperature).

Even adopting two or more wrapping machines placed side by side, in order to increase productivity, is not validly practicable: quite apart from the purchase cost of each individual additional wrapping machine and the corresponding additional energy consumption, there are serious problems associated with the overall space occupation (a consequence of placing multiple machines side by side) which also implies a considerable increase in the costs of cooling the environment in which these will operate.

US 4 281 757 A discloses an apparatus for feeding a number of wrapping machines with chocolate bars or the like, produced continuously and advancing end-on in a procession in more or less regular files and rows comprising a series of successive modules which feed the individual wrapping machines. The modules are preceded by a separator which channels the procession into separate lanes. The modules form part of a conveyor system which advances the articles continuously along a horizontal path. The modules operate in succession to lift the articles in the associated lane from the horizontal path and deliver them to an intermittently travelling cross conveyor leading to one of the wrapping machines. When any packaging machine is unable to accept articles, the articles lifted by its module are returned to the horizontal feed path and the cross conveyor of that module is stopped.

The main aim of the present invention is to solve the above-mentioned drawbacks, by providing a feeder for machines for wrapping sheet-like chewing gum products which has high levels of productivity.

Within this aim, an object of the invention is to provide a feeder for machines for wrapping sheet-like chewing gum products which offers reduced space occupation.

Another object of the invention is to provide a feeder for machines for wrapping sheet-like chewing gum products which makes it possible to keep operating costs low.

Another object of the present invention is to provide a feeder for machines for wrapping sheet-like chewing gum products which is low-cost, easily and practically implemented, and safe to use.

In accordance with the invention, there is provided: a feeder for machines for wrapping sheet-like chewing gum products as defined in the appended claims 1 to 3; a wrapping machine as defined in the appended claims 4-8; and a wrapping process for sheet-like chewing gum products as defined in the appended claim 9.

Further characteristics and advantages of the invention will become more apparent from the description of a preferred, but not exclusive, embodiment of the feeder for machines for wrapping sheet-like chewing gum products according to the invention, which is illustrated by way of non-limiting example in the accompanying drawings wherein:

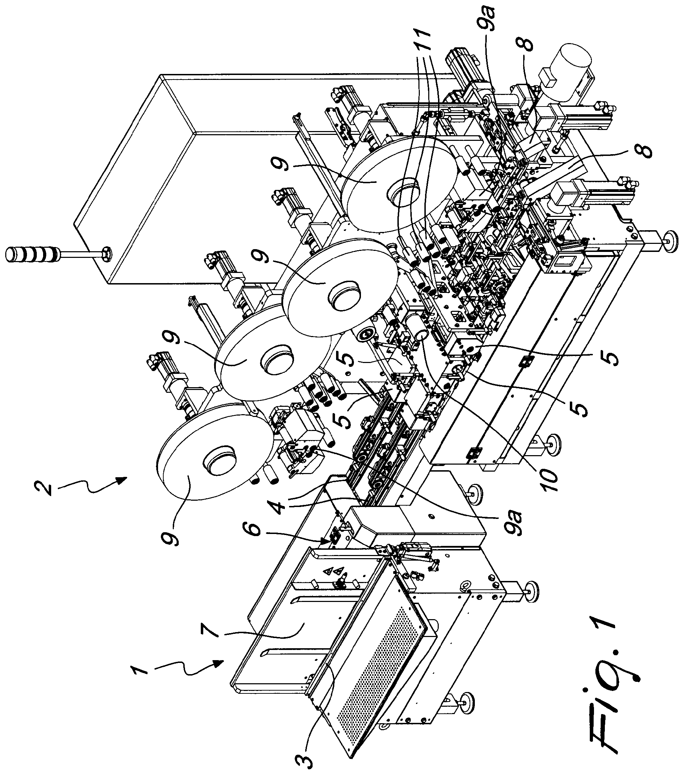

Figure 1 is a perspective view of a feeder associated with a wrapping machine according to the invention;

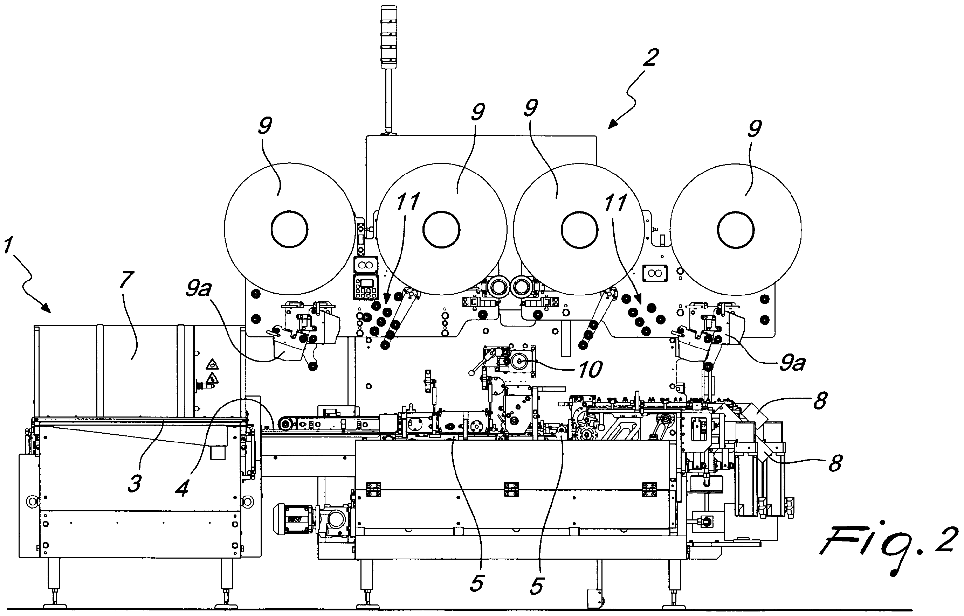

Figure 2 is a front elevation view of the machine in Figure 1;

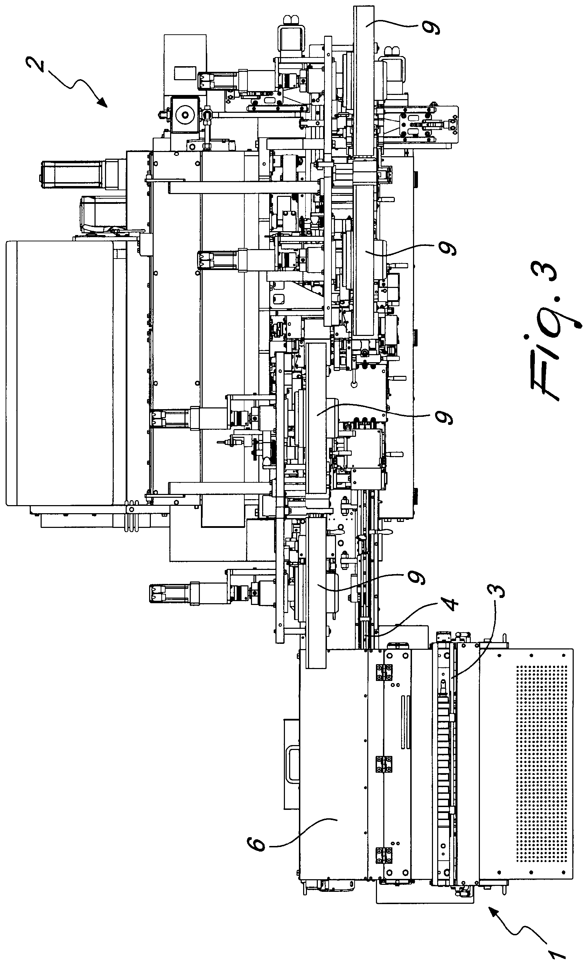

Figure 3 is a view from above of the machine in Figure 1;

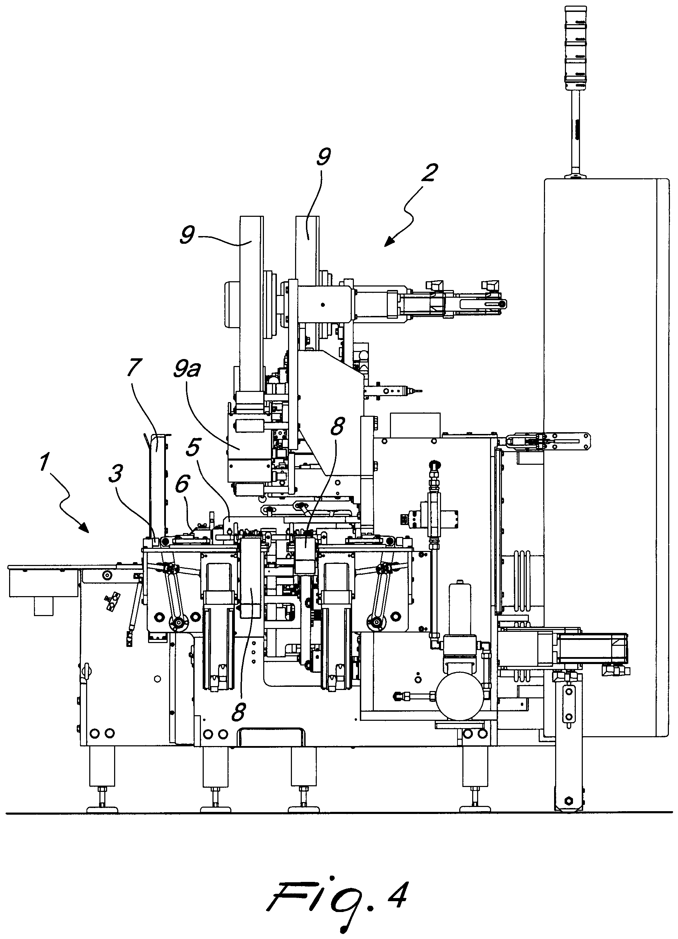

Figure 4 is a side view of the machine in Figure 1;

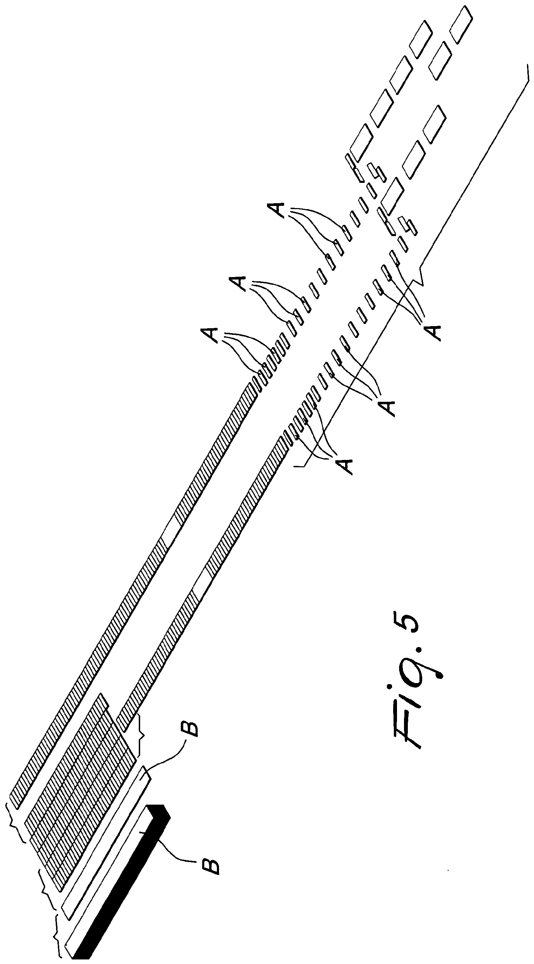

Figure 5 is a perspective schematic view of the flow of product in the machine in Figure 1.

With particular reference to the figures, the reference numeral 1 generally designates a feeder for machines 2 for wrapping sheet-like chewing gum products A.

The feeder 1 comprises a track for supplying laminar blanks B, a cutting unit 3 for dividing the blanks B into sheet-like products A and a channel 4 for supplying a respective wrapping station 5 with the sheet-like products A.

According to the invention, the channels 4 are at least two in number, are arranged mutually side by side, and lead to respective mutually opposite wrapping elements of distinct wrapping stations 5.

A sorting apparatus 6 is interposed between the channels 4 and the cutting unit 3 for the selective transfer of the sheet-like products A that arrive from the cutting unit 3 to one respective channel 4 at a time.

According to a particular embodiment of undoubted practical and applicative interest, the supply track is arranged downstream of an accumulation magazine 7 that comprises an area for stacking the blanks B.

The blank B arranged at the lowest level will, in such case, abut against a conveyance element for its transfer to the cutting unit 3.

According to the invention, the sorting apparatus 6 comprises respective deflectors, which are arranged downstream of the output of the cutting unit 3 and can be oriented selectively toward one of the channels 4.

The sheet-like product A, in output from the cutting unit 3, will thus pass along the deflector until it arrives at a respective supply channel 4.

If it is necessary to sort on a high number of channels 4 it is possible to provide specific elements for gripping and movement (of conventional type for "pick and place" applications), or adopt more complex deflectors constituted by a plurality of deflector plates which can be oriented arranged in series along predefined paths leading to different channels 4.

In order to specify the characteristics of a particularly efficient embodiment, the channels 4 can comprise respective motorized conveyor belts: each belt can be in synchronous motion with the respective wrapping station 5 to which it will deliver the products A.

Preferably non-synchronous belts are provided on which the products accumulate, queuing up: in this manner it will be possible for the subsequent wrapping stations to pick up the products in an orderly fashion and this will automatically result in synchronous operation by means of a synchronous pickup.

According to a possible implementation of the present invention the channels 4 will be two in number, substantially parallel, and lead to two respective series of stations 5 that will carry out (each substantially independently) the wrapping of the products A circulating on them.

The scope of the present invention also includes a wrapping machine 2 belonging to the known type of machine which comprises a channel 4 for supplying sheet-like chewing gum products A, a series of wrapping stations 5, and an output line of individually wrapped products A.

According to the invention, the specific wrapping machine 2 according to the invention differs from those of the known type in that the supply channels 4 are at least two in number, each one being designed to supply sheet-like products A to a respective series of wrapping stations 5.

Products of irregular shape or packaged imperfectly will lead to at least one discard line 8.

At least one supply track of laminar blanks B will conveniently be arranged upstream of the supply channels 4.

At least one cutting unit 3, which is adapted to divide blanks B into sheet-like products A, will intercept the supply track of blanks B, upstream of the channels 4.

At least one sorting apparatus 6 is interposed between the supply channels 4 and the cutting unit 3 for the selective transfer of the sheet-like products A that arrive from the cutting unit 3 to one respective channel 4 at a time.

Furthermore, in the machine 2 according to the invention, each series of wrapping stations 5 comprises an apparatus for juxtaposing a contoured sheet with respect to the product A.

Such apparatus will be surmounted by at least one storage spool 9 for a respective ribbon and by a cutting apparatus 10 for cutting the contoured sheet from such ribbon.

According to a specific application of the previously-cited embodiment, the storage spools 9 are two in number, each one being provided with respective transmission pulleys 11 for the accumulation of ribbon, of the type of a buffer.

In such case, the ribbons from the pulleys lead to respective, alternately active inputs of a device 9a that is designed to automatically join the end of a first spool 9 with the beginning of a second spool 9.

Naturally, at each channel 4 there will be respective spools 9 adapted to supply the ribbon from which to make the contoured sheets that will wrap each individual product A.

Furthermore, the pairs of spools 9 that surmount a first supply channel 4 are conveniently arranged upstream, with respect to the advancement direction of the sheet-like products A along the channels 4, of the pairs of spools 9 that surmount an additional supply channel 4.

The accompanying figures show a possible embodiment of the machine 2 which has two distinct channels 4.

According to this embodiment, which involves the presence of two channels 4, the channels will be arranged upstream of two distinct series of wrapping stations 5; each one of such two wrapping stations 5 will comprise, in turn, an apparatus for juxtaposing a contoured sheet with respect to the product A.

In conformance with the foregoing explanation, such apparatus will be surmounted by two storage spools 9 for a respective ribbon: each spool 9 will be provided with respective transmission pulleys 11 for the accumulation of ribbon, thus providing an accumulation buffer.

The ribbons will lead from such pulleys 11 to respective, alternately active, inputs of a respective cutting apparatus for cutting, from this ribbon, the contoured sheet with which to wrap a single product A.

Lastly, the scope of the present invention covers a wrapping process for sheet-like chewing gum products A which involves a sequence of consecutive steps.

A first step involves picking up a laminar blank B from a supply track.

Generally the blank B will be constituted by a laminar portion of a width equal to the length of the product A and a length not shorter (and generally longer) than the sum of the widths of a preset number of products A.

However, the possibility is not ruled out that the blank B can be constituted by a continuous strip of material having a width identical with the length of each product A. In such case the continuous strip could be supplied directly by the apparatus that is designed to produce and roll the raw material that constitutes the products A (for example chewing gum).

In a second step it will be necessary to divide each laminar blank B into sheet-like products A (in particular into a preset number of sheet-like products A, by making parallel transverse cuts) by way of at least one respective cutting unit 3.

A third step involves the selective transfer of sheet-like products A coming from the cutting unit 3 to at least two distinct supply channels 4 by way of a sorting apparatus 6: such transfer of products A to the channels 4 will occur individually and selectively, i.e. product A or one set of products A will be transferred to one channel 4 at a time.

A fourth and final step involves wrapping each individual product A that arrives from a respective supply channel 4 with a respective contoured sheet, by means of a series of consecutive wrapping stations 5, each series being aligned with a respective channel 4.

Conveniently the present invention solves the problems explained previously, by providing a feeder 1 for machines 2 for wrapping sheet-like chewing gum products A, which has high levels of productivity.

In fact the possibility of carrying out the wrapping of each individual sheet-like product A on two distinct consecutive series of stations 5, in a single machine 2, makes it possible to operate at a speed similar to that of conventional machines (which thus causes no damage to the products A, by imposing acceleration levels lower than a known limit value), but achieving a decidedly higher number of wrapped products A at its outputs (a number of wrapped products A that is potentially as much as double that of conventional machines).

It should be noted that the outputs are not shown in the accompanying figures since they conform entirely to conventional implementation solutions.

Advantageously the feeder 1 for wrapping machines 2 makes it possible to maintain reduced space occupation for the machine 2, in particular levels of space occupation similar to those of machines of the conventional type.

Conveniently, therefore, the wrapping machines 2 make it possible to keep operating costs down: this is because their low space occupation makes it possible to install them in climate controlled environments (inside which the material that constitutes the chewing gum assumes a higher stiffness and thus is easier to work with) of dimensions substantially similar to those for machines of the standard type.

Profitably, the feeder 1 and the machine 2 for wrapping sheet-like products A according to the invention can be implemented at a substantially low cost, being easily and practically implemented and safe in application in that they comprise components and intermediate stations that are derived from implementations of conventional apparatuses.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A feeder for machines (2) for wrapping sheet-like chewing gum products (A) of the type comprising a track for supplying laminar chewing gum blanks (B), a cutting unit (3) for dividing the blanks into sheet-like chewing gum products (A) and a channel (4) for supplying a respective wrapping station (5) with said sheet-like chewing gum products (A), **characterized in that** said channels (4) are at least two in number, are arranged mutually side by side, and lead to respective mutually opposite wrapping elements of distinct wrapping stations (5), a sorting apparatus (6) being interposed between said channels (4) and said cutting unit (3) for the selective transfer of the sheet-like chewing gum products (A) that arrive from said cutting unit (3) to one respective channel (4) at a time, said sorting apparatus (6) comprising respective deflectors, arranged downstream of the output of said cutting unit (3), which can be oriented selectively toward one of said channels (4), the sheet-like chewing gum product (B) in output from said cutting unit (3) moving along said deflector to a respective supply channel (4).

2. The feeder according to claim 1, **characterized in that** said supply track is arranged downstream of an accumulation magazine (7) that comprises an area for stacking the chewing gum blanks (B), the chewing gum blank (B) arranged at the lowest level abutting against a conveyance element for its transfer to the cutting unit (3).

3. The feeder according to claim 1, **characterized in that** said channels (4) comprise respective motorized conveyor belts, each belt being motorized with a rule of motion that is substantially independent of the respective wrapping station (5), the chewing gum products (A) conveyed by said belt accumulating at the area for being picked up of the respective wrapping station (5).

4. A wrapping machine, of the type comprising a channel (4) for supplying sheet-like chewing gum products (A), a series of wrapping stations (5) and a line for the exit of wrapped products (8), **characterized in that** said supply channels (4) are at least two in number, each one adapted to supply sheet-like chewing gum products (A) to a respective series of wrapping stations (5), upstream of said supply channels (4) at least one magazine (7) for laminar chewing gum blanks (B), at least one cutting unit (3) for dividing the chewing gum blanks (B) into sheet-like chewing gum products (A) and at least one sorting apparatus (6) for the selective transfer of the sheet-like chewing gum products (A) that arrive from said cutting unit (3) to one respective channel (4) at a time, said sorting apparatus (6) comprising respective deflectors, arranged downstream of the output of said cutting unit (3), which can be oriented selectively toward one of said channels (4), the sheet-like chewing gum product (B) in output from said cutting unit (3) moving along said deflector to a respective supply channel (4).

5. The wrapping machine according to claim 4, **characterized in that** each series of wrapping stations (5) comprises an apparatus for juxtaposing a contoured sheet with respect to the chewing gum product (A), said apparatus being surmounted by at least one storage spool (9) for a respective ribbon and by a cutting apparatus for cutting said contoured sheet from said ribbon.

6. The wrapping machine according to claim 5, **characterized in that** said storage spools (9) are two in number, each being provided with respective transmission pulleys for ribbon accumulation, of the type of a buffer, said ribbons, from said pulleys, leading to respective alternately active inputs of said cutting apparatus.

7. The wrapping machine according to one or more of claims 4 to 6, **characterized in that** the pairs of spools (9) that surmount a first supply channel (4) are arranged upstream, with respect to the advancement direction of the sheet-like chewing gum products (A) along said channels (4), of the pairs of spools (9) that surmount an additional supply channel (4).

8. The wrapping machine according to one or more of claims 4-7, **characterized in that** said supply channels (4) are two in number, arranged upstream of two distinct series of wrapping stations (5), each one of said two wrapping stations (5) comprising an apparatus for juxtaposing a contoured sheet with respect to the chewing gum product (A), said apparatus being surmounted by two storage spools (9) for a respective ribbon, each spool being provided with respective transmission pulleys for the accumulation of ribbon, of the type of a buffer, said ribbons, from said pulleys, leading to respective alternately active inputs of said cutting apparatus for cutting said contoured sheet from said ribbon.

9. A wrapping process for sheet-like chewing gum products, which comprises the steps of:
- picking up a laminar chewing gum blank (B) from a supply track;
- dividing each laminar chewing gum blank into sheet-like chewing gum products (A) by means of at least one respective cutting unit (3);
- transferring selectively the sheet-like chewing gum products (A) that arrive from said cutting unit (3) to one at a time of at least two distinct supply channels (4) by means of a sorting apparatus (6) comprising respective deflectors, arranged downstream of the output of said cutting unit (3), which can be oriented selectively, toward one of said channels (4), the sheet-like chewing gum product (B) in output from said cutting unit (3) moving along said deflector to a respective supply channel (4);
- wrapping each individual chewing gum product (A) that arrives from a respective supply channel (4) in a respective contoured sheet by means of a series of consecutive wrapping stations (5) that are aligned with a respective channel (4).

## Patentansprüche

1. Eine Zuführvorrichtung für Maschinen (2) zum Einwickeln scheibenartiger Kaugummiprodukte (A), von der Art, die Folgendes umfasst: eine Bahn zum Zuführen laminarer Kaugummi-Rohlinge (B), eine Schneideinheit (3) zum Zerteilen der Rohlinge in scheibenartige Kaugummiprodukte (A) und einen Kanal (4) zum Zuführen der scheibenartigen Kaugummiprodukte (A) an eine jeweilige Einwickelstation (5), **dadurch gekennzeichnet, dass** die Kanäle (4) mindestens zwei an der Zahl sind, nebeneinander angeordnet sind und zu jeweiligen einander gegenüberliegenden Einwickelelementen getrennter Einwickelstationen (5) führen; wobei eine Sortiervorrichtung (6) zwischen den Kanälen (4) und der Schneideinheit (3) angeordnet ist für den selektiven Transfer der scheibenartigen Kaugummiprodukte (A), die von der Schneideinheit (3) kommen, an einen jeweiligen Kanal (4) auf einmal; wobei die Sortiervorrichtung (6) jeweilige Ablenker umfasst, stromabwärts vom Ausgang der Schneideinheit (3) angeordnet, die selektiv zu einem der Kanäle (4) hin ausgerichtet sein können; wobei sich das scheibenartige Kaugummiprodukt (B) im Ausgang von der Schneideinheit (3) entlang dem Ablenker zu einem jeweiligen Zuführkanal (4) bewegt.

2. Die Zuführvorrichtung gemäß Anspruch 1, **dadurch gekennzeichnet, dass** die Zuführbahn stromabwärts von einem Sammelmagazin (7) angeordnet ist, das einen Bereich zum Stapeln der Kaugummi-Rohlinge (B) umfasst; wobei der Kaugummi-Rohling (B), der auf der niedrigsten Ebene angeordnet ist, an ein Förderelement für seinen Transfer zur Schneideinheit (3) anstößt.

3. Die Zuführvorrichtung gemäß Anspruch 1, **dadurch gekennzeichnet, dass** die Kanäle (4) jeweilige motorisierte Förderbänder umfassen, wobei jedes Band mit einer Bewegungsregel motorisiert ist, die im Wesentlichen unabhängig von der jeweiligen Einwickelstation (5) ist, wobei die von dem Band beförderten Kaugummiprodukte (A) sich in dem Bereich sammeln, um von der jeweiligen Einwickelstation (5) aufgenommen zu werden.

4. Eine Einwickelmaschine von dem Typ, der Folgendes umfasst:
einen Kanal (4) zum Zuführen scheibenartiger Kaugummiprodukte (A), eine Reihe von Einwickelstationen (5) und eine Strecke für den Austritt eingewickelter Produkte (8), **dadurch gekennzeichnet, dass** die Zuführkanäle (4) mindestens zwei an der Zahl sind, von denen jeder ausgebildet ist, um einer jeweiligen Reihe von Einwickelstationen (5) scheibenartige Kaugummiprodukte (A) zuzuführen, stromaufwärts von den Zuführkanälen (4) mindestens ein Magazin (7) für laminare Kaugummi-Rohlinge (B), mindestens eine Schneideinheit (3) zum Zerteilen der Kaugummi-Rohlinge (B) in scheibenartige Kaugummiprodukte (A) und mindestens eine Sortiervorrichtung (6) für den selektiven Transfer der scheibenartigen Kaugummiprodukte (A), die von der Schneideinheit (3) kommen, an einen jeweiligen Kanal (4) auf einmal, wobei die Sortiervorrichtung (6) jeweilige Ablenker umfasst, stromabwärts vom Ausgang der Schneideinheit (3) angeordnet, die selektiv zu einem der Kanäle (4) hin ausgerichtet sein können; wobei sich das scheibenartige Kaugummiprodukt (B) im Ausgang von der Schneideinheit (3) entlang dem Ablenker zu einem jeweiligen Zuführkanal (4) bewegt.

5. Die Einwickelmaschine gemäß Anspruch 4, **dadurch gekennzeichnet, dass** jede Reihe von Einwickelstationen (5) eine Vorrichtung zum Nebeneinanderstellen einer konturierten Schicht im Verhältnis zum Kaugummiprodukt (A) umfasst, wobei die Vorrichtung von mindestens einer Speicherspule (9) für ein jeweiliges Band und von einer Schneidvorrichtung zum Abschneiden der konturierten Schicht von dem Band überragt wird.

6. Die Einwickelmaschine gemäß Anspruch 5, **dadurch gekennzeichnet, dass** die Speicherspulen (9) zwei an der Zahl sind, wobei jede mit jeweiligen Übertragungsrädern zum Sammeln des Bandes vom Typ eines Puffers ausgestattet ist, wobei die Bänder von den Rädern zu jeweiligen abwechselnd aktiven Eingängen der Schneidvorrichtung führen.

7. Die Einwickelmaschine gemäß einem oder mehreren der Ansprüche 4 bis 6, **dadurch gekennzeichnet, dass** die Paare von Spulen (9), die einen ersten Zuführkanal (4) überragen, mit Bezug auf die Vorschubrichtung der scheibenartigen Kaugummiprodukte (A) entlang den Kanälen (4) stromaufwärts von den Paaren von Spulen (9) angeordnet sind, die einen zusätzlichen Zuführkanal (4) überragen.

8. Die Einwickelmaschine gemäß einem oder mehreren der Ansprüche 4-7, **dadurch gekennzeichnet, dass** die Zuführkanäle (4) zwei an der Zahl sind, angeordnet stromaufwärts zweier getrennter Reihen von Einwickelstationen (5), wobei jede der zwei Einwickelstationen (5) eine Vorrichtung zum Nebeneinanderlegen einer konturierten Schicht im Verhältnis zum Kaugummiprodukt (A) umfasst, wobei die Vorrichtung von zwei Speicherspulen (9) für ein jeweiliges Band überragt wird, wobei jede Spule mit jeweiligen Übertragungsrädern zum Sammeln des Bandes, vom Typ eines Puffers, ausgestattet ist, wobei die Bänder von den Rädern zu jeweiligen abwechselnd aktiven Eingängen der Schneidvorrichtung zum Abschneiden der konturierten Schicht von dem Band führen.

9. Ein Einwickelverfahren für scheibenartige Kaugummiprodukte, das folgende Schritte umfasst:
- Aufnehmen eines laminaren Kaugummi-Rohlings (B) von einem Zuführband;
- Zerteilen jedes laminaren Kaugummi-Rohlings in scheibenartige Kaugummiprodukte (A) mit Hilfe mindestens einer jeweiligen Schneideinheit (3);
- selektives Überführen der scheibenartigen Kaugummiprodukte (A), die von der Schneideinheit (3) kommen, auf einmal an einen von mindestens zwei getrennten Zuführkanälen (4) mit Hilfe einer Sortiervorrichtung (6), die jeweilige Ablenker, angeordnet stromabwärts vom Ausgang der Schneideinheit (3), umfasst, die selektiv zu einem der Kanäle (4) hin ausgerichtet sein können; wobei sich das scheibenartige Kaugummiprodukt (B) im Ausgang von der Schneideinheit (3) entlang dem Ablenker zu einem jeweiligen Zuführkanal (4) bewegt;
- Einwickeln jedes einzelnen Kaugummiprodukts (A), das von einem jeweiligen Zuführkanal (4) kommt, in einer jeweiligen konturierten Schicht mit Hilfe einer Reihe aufeinander folgender Einwickelstationen (5), die mit einem jeweiligen Kanal (4) ausgerichtet sind.

## Revendications

1. Dispositif d'acheminement pour emballeuses (2) de produits en gomme à mâcher (A) en forme de feuilles, du type comportant une piste pour fournir des ébauches (B) de gomme à mâcher en plaques, un système de coupe (3) pour diviser les ébauches en produits en gomme à mâcher (A) en forme de feuilles et une gouttière (4) pour fournir à un poste d'emballage respectif (5) lesdits produits en gomme à mâcher (A) en forme de feuilles, **caractérisé en ce que** lesdites gouttières (4) sont au moins au nombre de deux, sont juxtaposées les unes aux autres et aboutissent à des éléments d'emballage respectifs mutuellement opposés de postes d'emballage distincts (5), une installation de tri (6) étant intercalée entre lesdites gouttières (4) et ledit système de coupe (3) pour le transfert sélectif, jusqu'à une seule gouttière respective (4) à la fois, des produits en gomme à mâcher (A) en forme de feuilles arrivant dudit système de coupe (3), ladite installation de tri (6) comprenant des déflecteurs respectifs, disposés en aval de la sortie dudit système de coupe (3), qui peuvent être orientés sélectivement vers une desdites gouttières (4), le produit en gomme à mâcher (B) en forme de feuille, à la sortie dudit système de coupe (3), se déplaçant le long du déflecteur jusqu'à une gouttière d'alimentation respective (4).

2. Dispositif d'acheminement selon la revendication 1, **caractérisé en ce que** ladite piste d'alimentation est disposée en aval d'un magasin d'accumulation (7) qui comprend une zone pour empiler les ébauches (B) de gomme à mâcher, l'ébauche (B) de gomme à mâcher placée au niveau le plus bas butant contre un élément d'acheminement pour son transfert jusqu'au système de coupe (3).

3. Dispositif d'acheminement selon la revendication 1, **caractérisé en ce que** lesdites gouttières (4) comprennent des bandes transporteuses motorisées respectives, chaque bande étant motorisée avec un principe de mouvement sensiblement indépendant du poste d'emballage respectif (5), les produits en gomme à mâcher (A) transportés par ladite bande s'accumulant dans la zone pour être prélevés au poste d'emballage respectif (5).

4. Emballeuse, du type comportant une gouttière (4) pour fournir des produits en gomme à mâcher (A) en forme de feuilles, une série de postes d'emballage (5) et une conduite pour la sortie de produits emballés (8), **caractérisée en ce que** lesdites gouttières d'alimentation (4) sont au moins au nombre de deux, conçues chacune pour fournir des produits en gomme à mâcher (A) en forme de feuilles à une série respective de postes d'emballage (5), en amont desdites gouttières d'alimentation (4) au moins un magasin (7) pour ébauches de gomme à mâcher en plaques (B), au moins un système de coupe (3) pour diviser les ébauches (B) de gomme à mâcher en produits en gomme à mâcher (A) en forme de feuilles, et au moins une installation de tri (6) pour le transfert sélectif, jusqu'à une seule gouttière respective (4) à la fois, des produits en gomme à mâcher (A) en forme de feuilles arrivant dudit système de coupe (3), ladite installation de tri (6) comprenant des déflecteurs respectifs, disposés en aval de la sortie dudit système de coupe (3), lesquels peuvent être orientés sélectivement vers une desdites gouttières (4), le produit en gomme à mâcher (B) en forme de feuille, à la sortie dudit système de coupe (3), se déplaçant le long du déflecteur jusqu'à une gouttière d'alimentation respective (4).

5. Emballeuse selon la revendication 4, **caractérisée en ce que** chaque série de postes d'emballage (5) comprend un système pour juxtaposer une feuille profilée par rapport au produit en gomme à mâcher (A), ledit appareil étant surmonté d'au moins une bobine de stockage (9) pour un ruban respectif et d'un moyen de coupe pour découper ladite feuille profilée dans ledit ruban.

6. Emballeuse selon la revendication 5, **caractérisée en ce que** lesdites bobines de stockage (9) sont au nombre de deux, chacune étant munie de poulies de transmission respectives pour l'accumulation de ruban, du type à butoir, lesdits rubans, depuis lesdites poulies, menant à des entrées respectives à activation alternée dudit moyen de coupe.

7. Emballeuse selon l'une quelconque des revendications 4 à 6, **caractérisée en ce que** les paires de bobines (9) qui surmontent une première gouttière d'alimentation (4) sont disposées en amont, par rapport au sens d'avance des produits en gomme à mâcher (A) en forme de feuilles le long desdites gouttières (4), des paires de bobines (9) qui surmontent une gouttière d'alimentation supplémentaire (4).

8. Emballeuse selon l'une quelconque des revendications 4 à 7, **caractérisée en ce que** lesdites gouttières d'alimentation (4) sont au nombre de deux, disposées en amont de deux séries distinctes de postes d'emballage (5), chacun desdits deux postes d'emballage (5) comprenant un système pour juxtaposer une feuille profilée par rapport au produit en gomme à mâcher (A), ledit système étant surmonté de deux bobines de stockage (9) pour un ruban respectif, chaque bobine étant munie de poulies de transmission respectives pour l'accumulation de ruban, du type à butoir, lesdits rubans, depuis lesdites poulies, menant à des entrées respectives à activation alternée dudit moyen de coupe pour découper ladite feuille profilée dans ledit ruban.

9. Procédé d'emballage pour produits en gomme à mâcher en forme de feuilles, comportant les étapes de :
- prélèvement d'une ébauche (B) de gomme à mâcher en plaque sur une piste d'alimentation ;
- division de chaque ébauche de gomme à mâcher en plaque en produits en gomme à mâcher (A) en forme de feuilles à l'aide d'au moins un système de coupe respectif (3) ;
- transfert sélectif, jusqu'à une seule à la fois d'au moins deux gouttières d'alimentations distinctes (4), des produits en gomme à mâcher (A) en forme de feuilles arrivant dudit système de coupe (3), à l'aide d'une installation de tri (6) comprenant des déflecteurs respectifs, disposés en aval de la sortie dudit système de coupe (3), lesquels peuvent être orientés sélectivement vers une desdites gouttières (4), le produit en gomme à mâcher (B) en forme de feuille, à la sortie dudit système de coupe (3), se déplaçant le long du déflecteur jusqu'à une gouttière d'alimentation respective (4) ;
- emballage de chaque produit individuel en gomme à mâcher (A) qui arrive d'une gouttière d'alimentation respective (4) dans une feuille profilée respective à l'aide d'une série de postes d'emballage consécutifs (5) alignés avec une gouttière respective (4).
